# EUROPEAN PATENT APPLICATION

(11) **EP 1 502 824 A1**
(43) Date of publication of application: **02.02.2005**
(21) Application number: 03425510.9
(22) Date of filing: 29.07.2003
(51) Int. Cl.: B60R 21/16

(54) **Fastening device for curtain air bag tether**

(71) Applicant: KEY SAFETY SYSTEMS, INC., Sterling Heights, Michigan 48314 (US)
(72) Inventor: Biglino, Stefano, 10126 Torino (IT)
(74) Representative: Gislon, Gabriele

(57) **Abstract**

Fastening device for curtain air bag tether (CAB) in a vehicle, comprising a bracket (1) provided with a slot (2) to engage the air bag tether and with a resilient tongue (3) to clamping coupling said bracket (1) with the vehicle body (10) at an opening (7) provided in said vehicle body (10).

## Description

The present invention relates to a fastening device for a curtain air bag (CAB) tether and in particular it concerns a bracket to fix CAB strap tethers to a vehicle body.

Air bag devices for side impacts are known as CABs or Curtain Air Bags and are usually fixed to the body of a vehicle above the windows, on the roof panel.

Traditionally CABs comprise a folded cushion contained in a housing cover, which cover keeps it folded until the CAB is activated. In order to have a correct CABs deployment, they are provided with a tether connected to the vehicle door pillar. Upon impact, the air bag inflates downwards to protect passengers from impact against interiors and windows of the vehicle and from contact with any glass slivers. The tether leads a CAB to open in a correct way.

A commonly used arrangement for fixing the tether to the pillar of the CAB provided door of a vehicle comprises a metal bracket, a nut and a screw. The bracket is provided with a through hole and is fastened onto the car body by means of a screw and a nut, the tether being inserted in a slot of the bracket and being secured to it.

This fixing device firmly attaches the tether to the body of a vehicle but has high production and assembly costs due to the need of screws and nuts and to the amount of time required for their assembly operations. Moreover the tightening torque of the screw-nut coupling must be checked by the OEM: this further step of the assembly process is time consuming and expensive.

The object of the present invention is to supply a cheaper way of fastening a curtain air bag (CAB) tether to the body of a vehicle by means of a fastening device for curtain air bag (CAB) tether which is simple and inexpensive to produce, to store and to assembly.

Another aim of the invention is to supply a fastening device for curtain air bag (CAB) tether which does not require any expensive check to verify the accuracy of its setup.

These aims are achieved by means of the present invention which relates to a fastening device for curtain air bag tether (CAB) in a vehicle comprising a bracket provided with means to engage a curtain air bag tether and with means to engage an opening in said vehicle body, characterized in that said means to engage said bracket to a vehicle body comprise a tongue for clamping coupling said bracket to said vehicle body.

According to a preferred aspect of the present invention the tongue is integral with the bracket and protrudes from it. The bracket and the tongue are made of stainless steel or any other material having the same, or similar, resilience.

A further object of the invention is a process for the manufacturing of the above mentioned fastening device for curtain air bag tether, characterized in that it comprises the steps of forming said tongue through shearing and embossing a portion of said bracket.

According to a preferred aspect of the process, the shearing and embossing steps are carried out in a direction such as to have very little flashes from the shearing step which are in contact with the vehicle body.

The invention has several advantages with respect to the known art.

The clamping coupling, i.e. plug-in coupling, between bracket and a vehicle body needs neither screws or nuts. This makes it possible to dramatically reduce production, storing and assembly costs of fastenings for curtain air bag (CAB) tether. Moreover the bracket according to the invention may be provided on the same vehicle body which has been designed for the nut-screw coupling.

The invention will now be described in greater detail with reference to the drawings enclosed as a non-limiting example, where:
- fig. 1 is a top view of a fastening for curtain air bag (CAB) tether according to the present invention;
- fig. 2 is a front view of the fastening for curtain air bag (CAB) tether of fig. 1;
- fig. 3 is a side view of the fastening for curtain air bag (CAB) tether of fig. 1;
- fig. 4 is a A-A cross section view of the fastening for curtain air bag (CAB) tether of fig. 1;
- fig. 5 is a partial sectional view of the fastening for curtain air bag (CAB) tether engaged in the body of a vehicle.
- Fig. 6 is a schematic view of the bracket of the invention engaging a portion of the vehicle pillar.

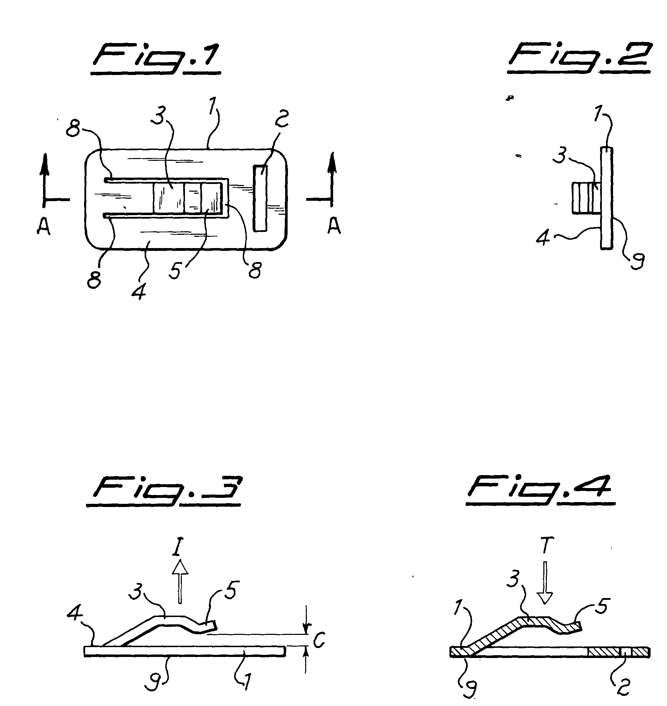

With reference to fig. 1-4, a fastening for curtain air bag (CAB) tether according to the present invention comprises a bracket 1 provided with a slot 2 to engage in a known manner, for example through sewing, a tether to the bracket itself, as well as means to clamping couple, i.e. to interference fit the bracket to the vehicle body.

In the shown embodiment said coupling means are resilient means suitable to engage the vehicle body and comprise a bracket portion 3 having a tongue shape.

In general, tongue 3 can be shaped in many different ways, provided that it is suitable to enter and slide into a slot or opening 7 provided on the vehicle body (see figures 5 and 6), for example on a pillar abutter to a window, and to engage the correspondent portion of the vehicle body between the contact surface 4 of the bracket 1 and the tongue 3.

Tongue 3 must provide, when inserted in the aforesaid slot 7, a clamping force on the metal sheet 10 of the vehicle body, sufficient to avoid the bracket from disengaging said slot due to, for example, vibrations or CAB inflating. The tongue portion 3 is preferably integral with the body of the bracket 1 and protrudes from the plan of the bracket 1.

Typically the bracket 1, which comprises the tongue portion 3, is made of stainless steel, high carbon steel, spring steel or any other material having the same, or similar resiliency or springback, i.e. a resilient performance. A suitable steel is the steel which corresponds to the standard AISI 301.

In the preferred embodiment, bracket 1 is integral with tongue 3 and is made of high carbon resilient steel AISI 301. In the shown embodiment the tongue 3 has a substantially arch-like shape ending in a clamping distal portion 5 which has to provide the required pressure on the vehicle body 10.

As shown in fig. 1 and in fig. 4 slot 2, which the CAB tether is secured to, is located on the bracket side where the free side, i.e. the distal portion 5 of the tongue 3, is located to concur in avoiding possible disengagement of the bracket from the vehicle body when the CAB is activated and the tether is stressed.

Between the clamping portion 5 of the tongue 3 and the upper surface 4 of the bracket 1 there is provided a clearance C. In order to achieve the aforesaid clamping force, the minimum displacement C in the bracket 1, i.e. the clearance between the distal portion 5 of the tongue 3 and the contact surface 4 of bracket 1, is less than the thickness d of the metal sheet of the vehicle body 10 (fig. 5). Preferably the length of displacement or clearance C is equal to or less than half the thickness d of the vehicle body 10 at the opening or slot 7, i.e. *C* ≤ 0.5*d.* A suitable value is within the range of 0.5**d** to 0.3**d**.

In this way, when tongue 3 is inserted in the slot 7 provided in the vehicle body, the tongue is deformed by deflection since the vehicle body is inserted, with a plug-in coupling (i.e. clamping coupling), between tongue 3 and bracket surface 4. From this moment on, the tongue 3 clamps, through its portion 5, the sheet metal 10 due to the springback of bracket 1 steel.

Figure 5 shows a further embodiment which provides a snap type coupling between bracket and pillar. In this embodiment the vehicle body 10 is provided, in addition to slot 7 through which the tongue is inserted, with a hole 6. The hole 6 is spaced from hole 7 by a length such as to allow the clamping portion 5 to enter the hole 6 thanks to the elasticity, i.e. resiliency, of the tongue. The clamping portion 5 of the tongue 3 then engages the corresponding hole 6 provided on the sheet metal of the vehicle through a snap type engagement so to ensure coupling stability.

In general, the bracket 1 can be shaped through different processes. If, as in the above described preferred embodiment, the bracket and the tongue are made of metal, tongue 3 is obtained through shearing and embossing a corresponding portion of bracket 1. In this case, as shown in figure 1, tongue 3 is defined by the trimming lines 8. Usually the trimming process cause flashes (not shown) to be present on edges of the trimming lines 8. It is important to avoid flashes from contacting the sheet metal of the vehicle body, because they can damage the anti-corrosion layer of the vehicle and contact the sheet metal of the body. Since bracket 1 and the vehicle body are generally made of different materials, if they contact each other through flashes on bracket 1, a corrosion process of the vehicle sheet metal may start.

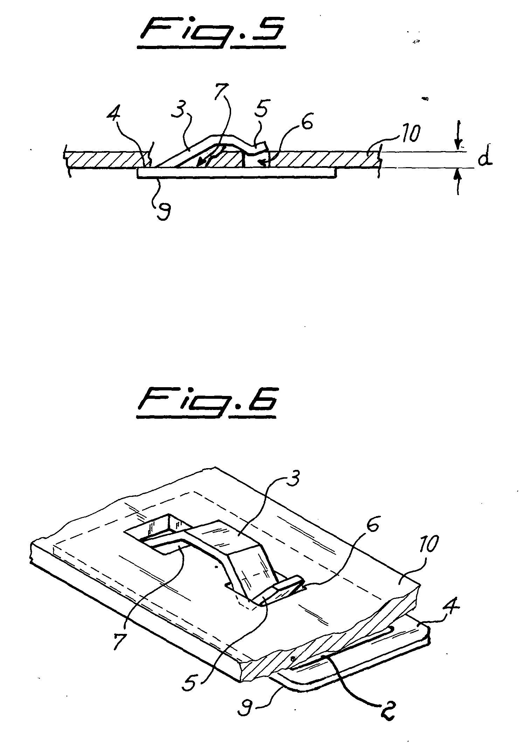

For this reason it is preferable to carry out the shearing process along the direction of the arrow T of figure 4, and the embossing operation, i.e. shaping process, in the opposite direction shown by the arrow L of figure 3. In this way flashes will result on the bottom surface 9 of the bracket 1 and will protrude from it toward the vehicle interior, the surface 4 being the one to contact the vehicle sheet metal as shown in figure 6.

## Claims

1. A fastening device for curtain air bag tether in a vehicle, comprising a bracket (1) provided with means (2) to engage a curtain air bag tether and with means to engage an opening (7) in said vehicle body (10), **characterized in that** said means to engage a vehicle body comprises a tongue (3) for clamping coupling said bracket (1) to said vehicle body (10).

2. A fastening device for curtain air bag tether according to claim 1, wherein said tongue (3) protrudes from said bracket (1).

3. A fastening device for curtain air bag tether according to claims 1 or 2, wherein said tongue (3) is integral with said bracket (1).

4. A fastening device for curtain air bag tether according to any previous claim from 2 to 3, wherein said tongue (3) comprises a distal portion (5) that is spaced from said bracket and is shaped to engage a slot (7) provided in said vehicle body (10).

5. A fastening device for curtain air bag tether according to any previous claim from 2 to 5, wherein the minimum clearance (C) between the upper surface (4) of the bracket (1) and said distal portion (5) of the tongue (3) is equal to or less than half the thickness (d) of said vehicle body (10) adjacent to said slot.

6. A fastening device for curtain air bag tether according to any previous claim, wherein said bracket (1) is made of high carbon steel AISI 301 or any other material having the same, or similar, resilience.

7. A fastening device for curtain air bag tether according to any previous claim, wherein said distal portion (5) of said tongue (3) is suitable to be coupled to a further opening (6) in said vehicle body (10) to provide a snap coupling.

8. A fastening device for curtain air bag tether according to any previous claim, wherein flashes from the bracket manufacturing are located on the opposite side (9) of the bracket (1) with respect to the vehicle body (10).

9. A process of manufacturing a fastening device for curtain air bag tether comprising a bracket (1) according to any previous claim, **characterized in that** it comprises the steps of forming a tongue (3) through shearing and embossing of a portion of said bracket (1).

10. A process according to claim 9, wherein said embossing operation is carried out in a direction such as to generate flashes from the shearing phase on the bracket side (9) opposite to the vehicle body (10).
